# EUROPEAN PATENT APPLICATION

(11) **EP 1 918 348 A1**
(43) Date of publication of application: **07.05.2008**
(21) Application number: 07119895.6
(22) Date of filing: 02.11.2007
(51) Int. Cl.: C09K 8/03, B65G 53/00, C01F 11/46

(54) **Methods to enhance the pneumatic handling characteristics of weighting agents**

(30) Priority: 03.11.2006 US 864243 P; 01.11.2007 US 933531
(71) Applicant: M-I LLC, Houston, TX 77072 (US)
(72) Inventor: Matlock, Wayne, Lafayette, LA 70508 (US); Massam, Jarrod, Aberdeen, Aberdeenshire AB10 6AL (GB); Burn, Andrew, Aberdeenshire, AB16 5YH (GB)
(74) Representative: Brykman, Georges

(57) **Abstract**

A method of processing oilfield weighting agents for pneumatic transference including treating a weight material ore with a chemical additive to produce a treated weighting agent and grinding the treated weighting agent to produce a ground treated weighting agent including a substantially homogenized mixture of the chemical additive and a ground weighting agent. Furthermore, the method includes classifying the ground weighting agent by size, discharging the ground treated weighting agent from the mill, and trapping the ground treated weighting agent in a storage vessel. Also, a method of processing oilfield weighting agents for pneumatic transference including grinding a weight material ore in a mill, wherein the grinding produces a ground weighting agent, and discharging the ground weighting agent from the mill. Additionally, the method includes applying a chemical additive to the ground weighting agent to produce a treated ground weighting agent, and trapping the treated ground weighting agent in a storage vessel.

## Description

### Cross Reference to Related Applications

This application, pursuant to 35 U.S.C. § 119(e), claims priority to U.S. Provisional Application Serial No. 60/864,243, filed November 3, 2006, and is hereby incorporated by reference in its entirety.

### Background

### Field of the Disclosure

The present disclosure generally relates to methods for processing weighing agent. More particularly, the present disclosure relates to methods for processing finely ground weighting agent with enhanced pneumatic transference properties. More particularly still, the present disclosure relates to methods for processing finely ground weighting agents with chemical additives to produce weighting agents with enhanced pneumatic transference properties.

### Background Art

Wellbore fluids serve many important functions throughout the process in drilling for oil and gas. One such function is cooling and lubricating the drill bit as it grinds though the earth's crust. As the drill bit descends, it generates "cuttings," or small bits of stone, clay, shale, or sand. A wellbore fluid serves to transport these cuttings back up to the earth's surface. As drilling progresses, large sections of pipe called "casings" are inserted into the well to line the borehole and provide stability. One of skill in the art should appreciate these uncased sections of the borehole, which are exposed to the high pressures of the reservoir, must be stabilized before casing can be set; otherwise, a reservoir "kick" or, in the extreme case, a "blowout"--a catastrophic, uncontrolled inflow of reservoir fluids into the wellbore--may occur. A wellbore fluid, if monitored properly, can provide sufficient pressure stability to counter this inflow of reservoir fluids.

A critical property differentiating the effectiveness of various wellbore fluids in achieving these functions is density, or mass per unit volume. The wellbore fluid must have sufficient density in order to carry the cuttings to the surface. Density also contributes to the stability of the borehole by increasing the pressure exerted by the wellbore fluid onto the surface of the formation downhole. The column of fluid in the borehole exerts a hydrostatic pressure (also known as a head pressure) proportional to the depth of the hole and the density of the fluid. Therefore, one can stabilize the borehole and prevent the undesirable inflow of reservoir fluids by carefully monitoring the density of the wellbore fluid to ensure that an adequate amount of hydrostatic pressure is maintained.

It has been long desired to increase the density of wellbore fluids, and, not surprisingly, a variety of methods exist. One method is adding dissolved salts such as sodium chloride, calcium chloride, and calcium bromide in the form of an aqueous brine to wellbore fluids. Another method is adding inert, high-density particulates to wellbore fluids to form a suspension of increased density. These inert, high-density particulates often are referred to as "weighting agents" and typically include powdered minerals of barite, calcite, or hematite.

Naturally occurring barite (barium sulfate) has been utilized as a weighting agent in drilling fluids for many years. Drilling grade barite is often produced from barium sulfate containing ores either from a single source or by blending material from several sources. It may contain additional materials other than barium sulfate mineral and thus may vary in color from off-white to grey or red brown. The American Petroleum Institute (API) has issued international standards to which ground barite must comply. These standards can be found in API Specification 13A, Section 2.

It is known in the art that during the drilling process, weighting agents, as well as cuttings, can create sedimentation or "sag" that can lead to a multitude of well-related problems such as lost circulation, loss of well control, stuck pipe, and poor cement jobs. The sag phenomenon arises from the settling out of particles from the wellbore fluid. This settling out causes significant localized variations in mud density or "mud weight," both higher and lower than the nominal or desired mud weight. The phenomenon generally arises when the wellbore fluid is circulating bottoms-up after a trip, logging, or casing run. Typically, light mud is followed by heavy mud in a bottoms-up circulation.

Sag is influenced by a variety of factors related to operational practices or drilling fluid conditions such as: low-shear conditions, drillstring rotations, time, well design, drilling fluid formulation and properties, and the mass of weighting agents. The sag phenomenon tends to occur in deviated wells and is most severe in extended-reach wells. For drilling fluids utilizing particulate weighting agents, differential sticking or a settling out of the particulate weighting agents on the low side of the wellbore is known to occur.

Particle size and density determine the mass of the weighting agents, which in turn correlates to the degree of sag. Thus it follows that lighter and finer particles, theoretically, will sag less. However, the conventional view is that reducing weighting agent particle size causes an undesirable increase in the fluid's viscosity, particularly its plastic viscosity. Plastic viscosity is generally understood to be a measure of the internal resistance to fluid flow that may be attributable to the amount, type or size of the solids present in a given fluid. It has been theorized that this increase in plastic viscosity attributable to the reduction in particle size--and thereby increasing the total particle surface area--is caused by a corresponding increase in the volume of fluids, such as water or drilling fluid, adsorbed in the particle surfaces. Thus, particle sizes below 10 µm have been disfavored.

Because of the mass of the weighting agent, various additives are often incorporated to produce a rheology sufficient to allow the wellbore fluid to suspend the material without settlement or "sag" under either dynamic or static conditions. Such additives may include a gelling agent, such as bentonite for water-based fluids or organically modified bentonite for oil-based fluids. A balance exists between adding a sufficient amount of gelling agent to increase the suspension of the fluid without also increasing the fluid viscosity resulting in reduced pumpability. One may also add a soluble polymer viscosifier such as xanthan gum to slow the rate of sedimentation of the weighting agent.

Various approaches exist in the art to provide a wellbore fluid with the desired density with a minimum impact on its fluid properties, or "rheology." One approach has been disclosed in U.S. Pat. No. 6,180,573 which involved purposefully removing some or all of the finest particles from a ground barite (i.e., particles below 6 µm), and then monitoring and maintaining the selected particle size by adding coarser material as the particle size degrades during use.

It is worth noting that, despite the general industry disfavor, other approaches have used small particles as weighting agents. One approach, disclosed in U.S. Pat. No. 5,007,480, uses manganomanganic oxide (Mn₃O₄) having a particle size of at least 98% below 10 µm in combination with conventional weighting agents such as API grade barite, which results in a drilling fluid of higher density than that obtained by the use of barite or other conventional weighting agents alone. Another approach is disclosed in EP-A-119 745, which describes an ultra high-density fluid for blowout prevention comprised of water, a first and possible second weighting agent, and a gellant made of fine particles of average diameter between 0.5 and 10 µm.

According to current API standards, particles having an effective diameter less than 6 µm, also known as "fines," may make up no more than 30% by weight of the total weighting agent to be added to the drilling fluid. Thus, while it is acceptable to have fine particles in the weighting agent, it has been conventionally preferred that the relative quantity of such particles be minimized.

The conventional view held that reduction in particle size in drilling fluids would lead to an undesirable increase in viscosity. However, as disclosed in U.S Publication No. 2004/0127366, assigned to the assignee of the present application, and hereby incorporated by reference herein, it was determined that very finely ground particles (d₅₀ < 2 µm and d₉₀ < 4 µm) coated with a deflocculating agent or dispersant generated suspensions or slurries that reduced sag while the dispersant controlled the inter-particle interactions that produced lower rheological profiles.

Further research into the use of finely ground particles resulted in methods for increasing the density of a drilling fluid and methods for lowering viscosity and minimizing sag as described in U.S. Patent Publication Nos. 2005/0277551, 2005/0277552, and 2005/0277553, assigned to the assignee of the present application, and hereby incorporated by reference herein.

Currently, while the use of fines as a weighting agent in drilling fluids is well known in the art, significant problems still exist with post-production treatment and transference of the fines. Generally, as fines are stored, they have a natural tendency to self-compact. Compaction occurs when the weight of an overlying substance results in the reduction of porosity by forcing the grains of the substance closer together, thus expelling fluids (e.g., water) from the pore spaces. Additionally, when multiple substance fines are intermixed, compaction may occur when a more ductile fine deforms around a less ductile fine, thereby reducing porosity and resulting in compaction.

Because finely ground barite particles (d₉₀ < 45-50 microns) have a tendency to self-compact during storage, subsequent transference of finely ground particles, as described above, poses problems to manufacturers, transporters, and end users of the fines. *See* D. Geldart, D, Types of Gas Fluidization, Powder Technology, 7 1973 at 285-292. Typically, barite fines are stored and transported in large vessels, wherein compaction is a common occurrence. Frequently, barite fines compact into a vessel during transport such that when the fines are ready to be unloaded, the fines have to be manually dug out of the vessel. The process of manually removing the fines is labor intensive, costly, and inefficient. Furthermore, because the vessels may be openly exposed to the air, the barite fines as they are removed may result in barite dust that may escape the vessel. As a result, a substantial portion of barite may be lost during transference.

Accordingly, there exists a need for an efficient method of treating weighting agents to enhance transferability.

### Summary of the Disclosure

In one aspect, embodiments disclosed herein relate to a method of processing oilfield weighting agents for pneumatic transference including treating a weight material ore with a chemical additive to produce a treated weighting agent and grinding the treated weighting agent to produce a ground treated weighting agent including a substantially homogenized mixture of the chemical additive and the ground weighting agent. Furthermore, the method includes classifying the ground weight agent by size, discharging the ground treated weighting agent from the mill, and trapping the ground treated weighting agent in a storage vessel.

In another aspect, embodiments disclosed herein relate to a method of processing oilfield weighting agent for pneumatic transference including grinding a weight material ore in a mill, wherein the grinding produces a ground weighting agent, and discharging the ground weighting agent form the mill. Furthermore, the method includes applying a chemical additive to the ground weighting agent to produce a treated ground weighting agent, and trapping the treated ground weighting agent in a storage vessel.

In another aspect, embodiments disclosed herein relate to a method of processing a weighting agent for a drilling fluid including producing a treated weighting agent having a specified size comprising d₉₀ < 10 microns, wherein the producing includes applying a chemical additive to the weighting agent. The method further including transferring the treated weighting agent pneumatically to a drilling location, and mixing the drilling fluid comprising the treated weighting agent.

In another aspect, embodiments disclosed herein relate to a method of processing a weighting agent for a drilling fluid including producing a treated weighting agent, wherein the producing includes modifying a surface charge of the weighting agent. The method further including transferring the treated weighting agent pneumatically to a drilling location, and mixing the drilling fluid comprising the treated weighting agent.

In another aspect, embodiments disclosed herein relate to a method of processing a weighting agent for a drilling fluid including producing a coated weighting agent, wherein the producing comprise coating a weighting agent with a chemical additive sufficient to allow pneumatic transference. The method further including transferring the coated weighting agent pneumatically to a drilling location and dispersing the coated weighting agent in the drilling fluid.

Other aspects and advantages of the present disclosure will be apparent from the following description and the appended claims.

### Brief Description of Drawings

Figure 1 is a flowchart of a method for processing weighting agents in accordance with an embodiment of the present disclosure.

Figure 2 is a flowchart of a method for processing weighting agents in accordance with an embodiment of the present disclosure.

Figure 3 is a diagram of a method of pneumatically transferring weighting agents in accordance with an embodiment of the present disclosure.

### Detailed Description

Generally, embodiments disclosed herein relate to methods for processing weighing agents for pneumatic transference. More specifically, embodiments disclosed herein relate to methods for processing finely ground weighting agents with chemical additives to enhance pneumatic transference properties.

Typically, ground weighting agents are stored in large vessels during transportation from a manufacturing plant to a distribution center or drill site. In the field, the term "weighting agent" or "weight material" is used generally to refer to high-specific gravity solid material used to increase density of a drilling mud. Weighting agents may include, for example, barium sulphate (barite), calcium carbonate, dolomite, ilmenite, hematite, olivine, siderite, and strontium sulphate, or any other material known to one of ordinary skill in the art. Weighting agent is ground from a weight material ore, and the weight material ore may include any of the above mentioned materials as source materials. When grinding weighting agents, the smaller diameter particles are often referred to as "fines" and typically include solid particles ranging in size from 4 to 50 microns. However, those of ordinary skill in the art will appreciate that fines may also include weighting agents with diameters of less than 4 microns. Furthermore, those of ordinary skill in the art will appreciate that the selection of the particular weighting agent for a given drilling operation may depend on the density of the material that is desired. Other considerations may influence the choice of a product such as cost, availability, power required for grinding, and residual effects on the wellbore. However, processing of any of the above listed weighting agents may benefit from the methods described herein.

In various embodiments, dust suppressors may be used with embodiments disclosed herein including, for example, polypropylene glycol. In one embodiment, products of alkylene oxides, such as a polyols and/or polyether, may be applied to the ore as a chemical treatment prior to grinding. Polyols include diols, triols, etc, including, for example ethylene glycol, propylene glycol, and/or diethylene and di- and tri-propylene glycol. Polyethers that may be used to coat weighting agents include, for example, an alkylene oxide product, polypropylene glycol, and polyethylene glycol. In an embodiment using an alkylene oxide product in a liquid state, treating the weight material ore may include, for example, spraying and/or soaking the ore with the additive.

However, in other embodiments, use of alternate chemical treatments typically associated with dust suppressors, such as, for example, alcohol alkoxylates and alkyl phenol alkoxylates (which are formed by adding an alkylene oxide to an alcohol or alkyl phenol), may be used. Additionally, other alkylene oxide condensates, such as alkylene oxide condensates of amides, amines, quaternary ammonium compounds, phosphate esters, and sulfonic acids. In another embodiment, coatings that decrease static charges between the treated particles may find particular use in embodiments of the present disclosure. Such anti-static compounds are thought to reduce buildup of static charges by making the surface of the coated material either slightly conductive either by being conductive or by absorbing moisture from the air. Such compounds may have both hydrophilic and hydrophobic portions, such that the hydrophobic side interacts with the surface and the hydrophilic side interacts with air moisture to bind water molecules. Examples of such anti-static agents include long-chain aliphatic amines (optimally ethoxylate) quaternary ammonium salts, phosphate esters, polyethylene or polypropylene glycols, and esters of polyols, polyethers, or conductive polymers. The above list of chemical treatments is merely illustrative, and as such, those of ordinary skill in the art will appreciate that alternate chemical treatments may be used according to the embodiments described herein. The specific type of chemical treatment may vary according to the requirements of a drilling operation. In certain embodiments, use of a low toxicity chemical treatment, such as monopropylene glycol, may provide a treatment that has low environmental impact properties. Furthermore, selection of such coatings may also depend upon the fluid into which the weighting agents will be added to provide for ease in dispersabiliy of such weighting agents in a wellbore fluid after transference to a drilling location.

Alternatively, weight material ore or weighting agents may be coated with, for example, wetting agents, emulsifiers, solvents, anti-caking agents, and/or fillers. Typical wetting agents include fatty acids, organic phosphate esters, modified imidazolines, amidoamines, alkyl aromatic sulfates, and sulfonates. SUREWET®, commercially available from M-I LLC, Houston, Texas, is an example of a wetting agent that may be suitable for coating weighting agents as discussed herein. SUREWET® is an oil based wetting agent and secondary emulsifier that is typically used to wet fines and drill solids to prevent water-wetting of solids. Moreover, SUREWET® may improve thermal stability, rheological stability, filtration control, emulsion stability, and enhance system resistance to contamination when applied to weighting ore.

In another embodiment, a solid treatment, for example a dry silica powder or calcium carbonate (CaCO₃), may be added to the weight material ore. In a solid state application, the silica powder calcium carbonate, or other solid state additive, may be added to or blended with the ore prior to grinding. A commercially available calcium carbonate includes SAFE-CARB®, also distributed by M-I LLC, Houston, Texas. SAFE-CARB® is an acid-soluble calcium carbonate bridging and weighting agent typically used in controlling fluid loss and maintaining density in drilling fluids. One of ordinary skill in the art will appreciate that polypropylene glycol, SUREWET®, silica powder and SAFE-CARB® are only examples of chemical additives that may be applied to weight ore prior to milling. As such, these chemical additives are merely exemplary of chemical additives that may be used in accordance with embodiments disclosed herein.

Other coatings, such as dispersant coatings, that may be present on the weighting agents, may include, carboxylic acids of molecular weight of at least 150, polybasic fatty acids, alkylbenzene sulphonic acids, alkane sulphonic acids, linear alpha-olefin sulphonic acid or the alkaline earth metal salts of any of the above acids, and phospholipids, a polymer of molecular weight of at least 2,000 Daltons, including a water soluble polymer which is a homopolymer or copolymer of monomers selected from the group comprising: acrylic acid, itaconic acid, maleic acid or anhydride, hydroxypropyl acrylate vinylsulphonic acid, acrylamido 2-propane sulphonic acid, acrylamide, styrene sulphonic acid, acrylic phosphate esters, methyl vinyl ether and vinyl acetate, and wherein the acid monomers may also be neutralized to a salt, thermoplastic elastomers, and hydrophobic agents including saturated or unsaturated fatty acids, metal salts of fatty acids, and mixtures thereof. Further, in particular embodiments, some of these coatings may be used in combination with some of chemical treatments described above. For example, in a particular embodiment, a polymer dispersant coated weighting agent may be then blended with a chemical additive to aid in flowability of the particles and allow for pneumatic transfer. In one embodiment, dispersant coated weighting agents may be blended with any of a glycol, SUREWET®, silica powder and SAFE-CARB®, for example, to aid in pneumatic transfer of the particles.

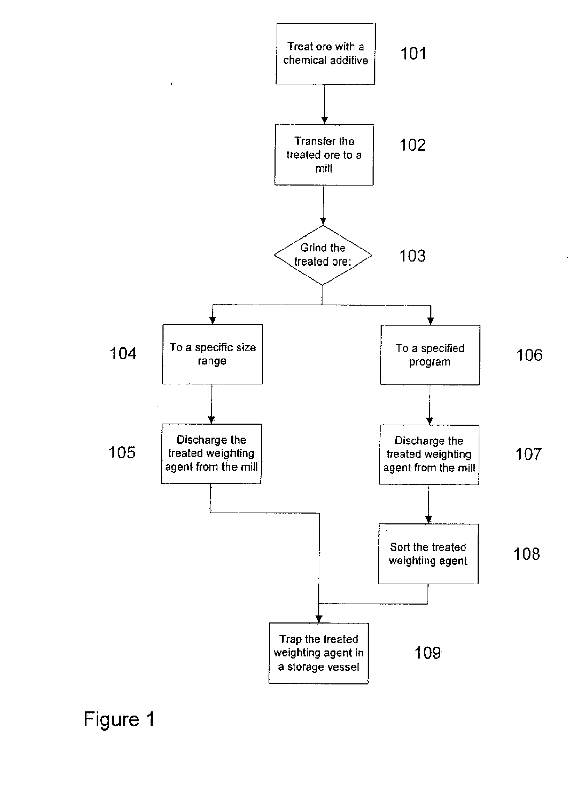

Referring initially to Figure 1, a method for processing weighting agents for use in drilling fluids in accordance with an embodiment of the present disclosure is shown. In this embodiment, a weight material ore is treated with a chemical additive 101. The chemical additive applied to the ore may include any chemical known to one of ordinary skill in the art that may be applied to ore to, among other things, prevent fines aeration.

After treating the ore with a chemical additive 101, the ore is transferred to a mill 102. The mill may include any mill capable of grinding ore to a size capable of being used as a weighting agent in a drilling fluid. In certain embodiments, the mill may include the functionality to grind ore into a plurality of weighting agent fines of a specified size, while in other embodiments, the mill may be specified to grind the ore into a plurality of weighting agent fines according to a specified program (e.g., for a specified time).

In an embodiment designed to grind ore to a specified size range 104, the chemically treated ore enters the mill, either in batches or continuously; is ground into a plurality of weighting agent fines; and then exits the mill into a classifier. The classifier determines the size range of the weighting agent based on diameter (i.e., particle size), sorts the weighting agent, and then either discharges the weighting agent from the mill 105 as a treated weighting agent, or reverts the weighting agent back to the mill for further processing. In certain embodiments, prior to milling, the ore may be subjected to precrushing, wherein the ore is broken into smaller pieces that may be handled by and fed into the mill more easily. Use of precrushing may allow ore to be introduced into the mill with a more uniform size, thereby promoting milling efficiency. Examples of methods for separating and classifying fines are discussed in U.S. Patent Application Serial No. 11/046983 (Attorney Docket No. PA-02046US), titled *Method and System for Harvesting Weighting Agent Fines,* assigned to the assignee of the present application, and hereby incorporated by reference in its entirety. Thus, in one embodiment of grinding ore to a specified size range, the ore is ground 103, and the plurality of weighting agent fines may be made up of, for example, particles having a size of d₉₀ < 10 microns. One of ordinary skill in the art will appreciate that while the d₉₀ < 10 micron size range may be desirable in the milling of certain weighting agents, other size ranges may also benefit from the present disclosure. Examples of alternate size ranges grinding operations specify may include d₃₀ < 6 microns, d₅₀ < 2 microns and d₉₀ < 4 microns. In other embodiments, weighting agents may be ground to include d₉₀ < 45-50 microns, d₅₀ < 15-20 microns, and d₁₀ < 0.8-1.3 microns, as is typically associated with finely ground barite. In still other embodiments, weighting agents may be ground to include d₉₀ < 32-36 microns, d₅₀ < 11-14 microns, and d₁₀ < 0.5-1.0 microns, as is typically associated with ultra-fine barite. In certain embodiments, weighting agents may be further ground to include d₉₀ < 3.0 microns, d₅₀ < 1.0 microns, and d₁₀ < 0.3 microns. However, those of ordinary skill in the art will realize that variations to the size of ground weighting agents may vary according to the requirements of a certain drilling fluid and/or drilling operation.

In another embodiment, ore may be ground according to a specified program 106. In such an embodiment, the chemically treated ore enters the mill, either in batches or continuously, is ground according to the specified program (e.g., for a predetermined time), and then is discharged from the mill 107 as a treated weighting agent. Before and/or after exiting the mill, the ground weighting agent or the treated weighting agent may be sorted 108 according to size, as described above. Those of ordinary skill in the art will appreciate that in other embodiments, the ore may be ground in a mill and then chemically treated prior to being sorted according to size.

During grinding 103, whether grinding to a specific size range 104 or grinding according to a specified program 106, the mill may apply pressure to the chemically treated weighting ore. The pressure associated with milling, and heat generated therefrom, may provide for a substantially homogeneous mixture of the chemical additive with the weighting agent, thereby creating a treated weighting agent. By creating a substantially homogenous mixture, the weighting agent may be more evenly coated with the chemical additive, thereby increasing the effectiveness of the application. Such a homogenous mixture may further promote anti-caking and positive transportability effects of the chemical additive with the weighting agent. In some embodiments, heat may be artificially provided by a heating device to further increase the homogenization of the mixture. One of ordinary skill in the art will appreciate that other methods of providing pressure and heat may also be used to enhance the homogenizing effect of the mixture in the mill.

After grinding the ore 103 into a plurality of weighting agent fines, the weighting agent may be separated 108, as described above, and/or otherwise discharged from the mill 105, 107 as a treated weighting agent. The treated weighting agent may then be trapped in a storage vessel 109 for storage and/or eventual transport.

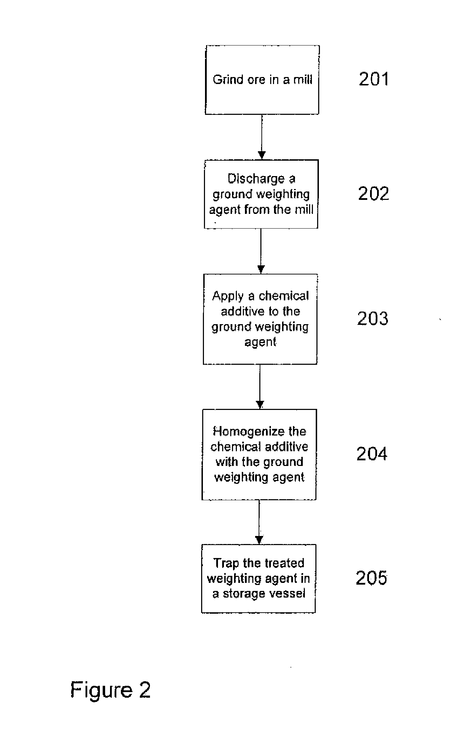

Referring now to Figure 2, another method for processing weighting agent for oil field use in accordance with an embodiment of the present disclosure is shown. In this embodiment, weight material ore is ground in a mill 201 in accordance with the methods as described above. As previously described, the ore may be ground according to a specified size range or according to a selected program. After the ore is ground, the plurality of resultant weighting agent fines are discharged from the mill 202. Prior to discharge, the weighting agent may be sorted according to size, or in the case of a specified size range grind, the weighting agent may be directly discharged. After discharge, a chemical additive may be applied to the weighting agent 203.

In this embodiment, because the weighting agent is being coated after milling, several methods of chemical treatment may be available. In one embodiment, coating of the weighting agent with the chemical additive may be performed in a "dry blending" process such that the process is substantially free of solvent. This process may include blending the weighting agent and the chemical additive at a desired ratio to form a blended material. The weight agent may then be fed to a heat exchange system, such as a thermal desorption system, and substantively cooled. After cooling, the chemical additive may be associated with the weighting agent homogenously, thereby producing a treated weighting agent, as described above. In certain embodiments, the weighting agent or the treated weighting agent may then be separated into coated weighting agent and uncoated weighting agent, so that the uncoated weighting agent may be recycled to the beginning of the process. However, in other embodiments, the blending process of the weighting agent with the chemical additives, with or without heating, may sufficiently result in a homogenized mixture. Other methods of dry blending weighting agents are discussed in U.S. Patent Application Serial No. 60/825,156, titled *Dispersant Coated Weighting Agents,* assigned to the assignee of the present application, and herein incorporated by reference in its entirety.

In another embodiment, coating of the weighting agent with the chemical additive may be performed in a "wet blending" process. In such a process, the weighting agent, in an aqueous suspension, may be ground within an agitated fluidized bed of a particulate grinding medium, including the chemical additive, for a time sufficient to provide a required particle size distribution. This process may result in a substantially homogenized mixture of a chemical coated weighting agent (*i.e.,* a treated weighting agent). Other methods and examples of wet blending weighting agents are discussed in U.S. Patent Application Serial No. 10/610,499, titled *Additive for Increasing the Density of an Oil-based Fluid and Fluid Comprising Such Additive,* assigned to the assignee of the present application, and herein incorporated by reference in its entirety.

In still another embodiment, coating of weighting agents with a chemical additive may be performed in an atomization process 203. In such a process, the chemical additive may be atomized by, for example, readily available atomizers, misters, sprayers, passing the additive through nozzles, or according to any other method known to those of ordinary skill in the art. The atomized additive may then be applied to the weighting agent. In one embodiment, the atomized additive may be applied directly after grinding while the weighting agents is still heated from the milling process. In other embodiments, the atomized additive may be applied to the weighting agent before, after, and/or during collection and/or separation. To better homogenize the chemical additive, in certain embodiments, it may be advantageous to apply heat, as described above, to the weighting agent after the atomized mist has been applied thereto. However, one of ordinary skill in the art will appreciate that in certain embodiments, applying the atomized mist under pressure to a stream of collected weighting agent fines may be sufficient to coat the weighting agent in a substantially homogenized manner 204, thereby resulting in a treated weighting agent.

Furthermore, the weight percent of chemical additive may be varied depending on the type of additive being used and the specific requirements of the weighting agent to be transferred. For example, in one embodiment, between 1% and 2% propylene glycol by weight of the total may be added to micronized barite via atomization. However, in another embodiment, approximately 1.5% monopropylene glycol by weight of the total may be atomized and applied to the micronized barite. The weight percent of the chemical additive and the method of applying the chemical additive to the weighting agent may vary according to the type of chemical additive being used, as well as the size of the weighting agent.

After applying the chemical additive 203 and producing a substantially homogenized treated weighting agent 204, the treated weighting agent may be trapped in a storage vessel 205. Before or after being trapped in the storage vessel, in some embodiments, the ground weighting agent and/or treated weighting agent may be sorted according to size, as described above, or modified further in accordance with any of the methods described above.

In all of the above described methods of applying a chemical additive to a weighting agent, one of ordinary skill in the art will appreciate that the more evenly dispersed the additive is throughout the weighting agent, the more effective the additive may act during transport and storage. Furthermore, while the above methods of applying the chemical additive have been described relative to a system of applying the additive after grinding, one of ordinary skill in the art will appreciate that the same methods may be used to apply a chemical additive to a weight material ore, as described relative to Figure 1. Further, in certain embodiments, it may be beneficial to apply the chemical additive contemporaneous with trapping the weighting agent. In such an embodiment, the additive may be mixed at predetermined intervals with the weighting agent as it is released into the storage vessel.

In another embodiment, a chemical additive may be added to a weight material ore, a partially ground, weighting agent, or a precrushed weight material ore while the material is in the mill. In such an embodiment, the chemical additive may be atomized, as described above, and applied to the material as it is being ground. For example, in one embodiment, weight material ore may enter the mill, and as the mill begins to grind the ore, liquid state propylene glycol may be atomized and applied to the ore via nozzles located inside the mill. Such an embodiment may provide the benefit of ensuring that the chemical additive is applied in an even manner, thereby providing a substantially homogenized treated weighting agent. Additionally, in a grinding operation using multiple mills, the chemical additive may be added between mills and/or between milling cycles.

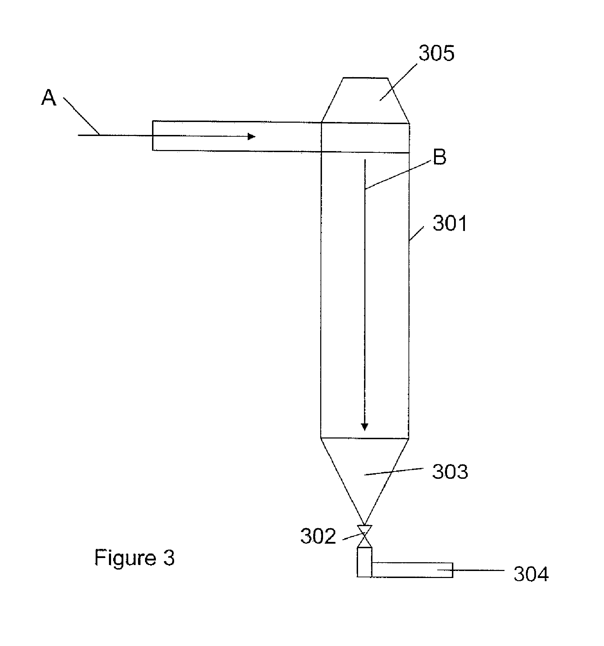

Referring now to Figure 3, a diagram of a method of pneumatically transferring a treated weighting agent in accordance with an embodiment of the present disclosure is shown. After processing weighting agent in accordance with any of the above disclosed methods, the treated weighting agent may include enhanced pneumatic transference properties. Such properties may be beneficial in both the storage and the transfer of the treated weighting agent. In Figure 3, the treated weighting agent is produced in an upstream processing device, as previously described. As the weighting agent and/or treated weighting agent moves in direction A, from the upstream processing devices into a storage vessel 301, if a chemical additive has not been previously added to the weighting agent, the additive may be applied thereto. As the treated weighting agent moves in direction B, the treated weighting agent is collected in storage vessel 301. Subsequently, the treated weighting agent may shift downward in storage vessel 301, thereby collecting at an end portion 302. Storage vessels 301 are generally found in the field as approximately 20 foot cylindrical vessels vertically disposed. In some embodiments, storage vessel 301 may include a valve 302 to control the flow of treated weighting agent from an end portion 303 of storage vessel 301 to transfer lines 304 connecting storage vessel 301 to downstream processing and/or transference equipment.

Typically, as weighting agent is collected at end portion 303, the weighting agent becomes compacted, and is thus less likely to effectively flow through the transport line 304. In fact, as described above, when untreated weighting agent fines (e.g., weighting agent in the size range of d₉₀ < 6 microns) are stored in storage vessels 301, they have a tendency to compact so as to prevent movement therethrough. Such compaction may pose additional problems, such as clogging valve 302 and/or transport line 304.

However, chemically treated weighting agent, as disclosed herein, may resist compaction, thereby allowing the treated weighting agent to be stored and transported more easily. In one embodiment, storage vessel 301 is connected to a pneumatic transfer device 305. Pneumatic transfer device 305 may provide air flow through storage vessel 301 in direction B. As air impacts the stored treated weighting agent, the increased pressure may result in the treated weighting agent being forced downward in direction B. When valve 302 is opened, the pressure in direction B, applied to the treated weighting agent by pneumatic transfer device 305, allows the treated weighting agent to freely flow through transfer line 304. When it is desirable to stop the flow of the treated weighting agent, the air flow may be stopped, or otherwise vented from pneumatic transfer device 305, so as to stop applying pressure to the treated weighting agent. Valve 302 may then be closed, and additional treated weighting agent may collect in storage vessel 301.

Because weighting agent, in accordance with the present disclosure, are chemically treated, the treated weighting agent may readily move through storage vessel 301 and/or transfer line 304, thereby creating a generally pumpable substrate. The pumpable nature of the substrate occurs because as the surface area of the gains of the treated weighting agent is increased by the addition of the chemical additive, static electricity that would normally cause the grains to compact is reduced. Thus, the reduction in static electricity may reduce compaction, thereby allowing the treated weighting agent to be moved by pneumatic means. Further description of methods of pneumatic transfer of fines is described in co-pending U.S. Application Serial No. 60/864,206, titled *Pneumatic Transfer of Finely Ground Weight Material,* by Wray Curtis *et al.,* filed on November 3, 2006, hereby incorporated by reference in its entirety.

Advantageously, embodiments of the aforementioned methods may increase the transference efficiency of ground weighting agent. Pneumatic transference of weighting agent may provide a quick and relatively less expensive method for moving the weighting agent between production lines and packaging, from packaging to shipping, from shipping to place of use, or any combinations thereof.

Because the methods may allow the transference of weighting agent pneumatically, there may be a decreased need for human labor. The pneumatic transference may replace the currently used process of manually digging out fines from shipping containers and then manually transferring them to their respective end locations. By reducing the need for manual labor, and the time associated therewith, the present disclosure may provide advantage over fine transference methods known in the prior art.

Additionally, pneumatic transfer systems may remain configured to prevent the escape of aerated weighting agent during the process of transference. Because the system may be configured to prevent the escape of aerated weighting agent, there is less chance that the weighting agent will be exposed to environmental contamination and moisture that may further increase the compaction of weighting agent during shipment. Moreover, because the weighting agent may be contained, traditional health and safety issued encountered with the transference of finely ground weighting agent may be minimized.

Furthermore, providing a pumpable finely ground weighting agent may allow common compaction issues to be overcome. Because the finely ground weighting agent is less likely to compact due to less static charges between the grains, the weighting agent may be stored for longer periods of time. Additionally, decreasing the static charges may allow the weighting agent of the particle diameters described above to be pneumatically transferred. Pneumatic conveyance of the sized weighting agent particles may advantageously allow for the more efficient transportation and blending of the particles at a drilling location. Finally, the simplification of storage and transference may result in lower costs associated with finely ground weighting agent handling, thereby reducing the overall cost of the drilling operation.

**Example(s)**

To test the pneumatic transference of finely ground weight materials, tests were performed by transferring chemically treated weighting agent between a pneumatic vessel and a storage vessel. In these tests, a micronized weight material of d₉₀ < 10 microns in size was coated with 1% by weight propylene glycol. The weight material included primarily barite, with additional quantities of quartz and hematite. The chemically treated weight material was then moved through a series of vessels of known horizontal and vertical distances. Specifics of the transfer test are outlined in detail below in Table 1.

**Table 1: Pneumatic Transfer Test Data**

| Test Number | Type of Test | Vertical Pipe Distance | Horizontal Pipe Distance | Bends in the Piping | Total Distance |
|---|---|---|---|---|---|
| 1 | Trailer to vertical silo plus 15' hose | 44' | 60' | 5 | 134' |
| 2 | Silo-to-silo | 40' | 42' | 5 | 97' |
| 3 | Silo-to-silo plus 150' hose | 40' | 42' | 5 | 247' |
| 4 | Silo-to-silo plus 50' hose over bridge | 112' | 320' | 16 | 530' |
| 5 | Silo-to-silo plus 50' hose over bridge | 112' | 480' | 22 | 708' |

The above described test approximates working conditions at actual manufacturing/drilling locations The test allowed for the determination of whether chemically treated material could be pneumatically conveyed through a standard pipe system at a drilling operation. Outcomes of the above listed five tests are described in detail below.

Test 1 included transference of the finely ground weight material from a bulk truck located outside a testing facility and connected to the plant's 6" steel pipe with a 5" hose. The truck was loaded with 180 sacks of weight material, and the material was allowed to settle for 12 hours to ensure conveyance reliability after de-aeration. A compressor was connected to the bulk truck with a 3" hose to provide additional pressure. Through the plant pipe work, the material was conveyed to a 6300 cf vertical bulk storage tank. The pneumatic transference of the material included pressurizing the bulk truck to approximately 17psi. A discharge valve on the truck was then opened, such that a flow of material was conveyed from the truck to the vertical storage tanks. Once the pressure in the truck fell to approximately 10psi, and the rate of conveyance slowed, and the pressure in the line was increased to bring the pressure back up to approximately 17psi. The process of allowing the pressure to fall, then repressurizing the system was repeated until the truck was substantially empty.

To determine the efficiency of the transference, system feedback and reactions were monitored during the test, and the conveyance rate in 20 sack increments was recorded during the test using a timer and digital scale. The test resulted in an average flow rate of .15 sacks/second.

Test 2 included transference from a first 6300 cf vertical bulk storage tank to a second 6300 cf vertical bulk storage tank through a 6" vertical steel pipe for 40' and a 6" horizontal steel pipe for 42'. The first tank was filled with 663 sacks of the chemically treated weighting agent, and once filled, the first tank was pressurized to 40psi. As described above, the system feedback and reactions were monitored, and the conveyance rate in 20 sack increments was recorded using a stop watch and digital scale. The test resulted in 625 sacks transferred in 14 minutes, thereby resulting in an average transfer rate of 0.88 sacks/second.

Test 3 included transference of finely ground weight material from a first 6300 cf bulk storage tank to a second 6300 cf bulk storage tank, as in Test 2, with the addition of 150' of 5" hosing. In this test, the first tank was filled with 625 sacks of the weight material, and the first tank was pressurized to 60psi. As described above, the conveyance rate of the test was observed and recorded in 20 sack increments. The results provided that 592 sacks of weight materials was transferred in 24 minutes, thereby producing an average transfer rate of 0.70 sacks/second.

Test 4 included the transference of finely ground weight material between a first 6300 cf bulk storage tank and a second 6300 cf bulk storage tank over a total distance of 530'. This test was also sent over a short bridge to simulate the pneumatic transference of weight material during the filling of a transportation vessel, such as a boat. The pipe work used in the test consisted of a 50' of 5" hose, 112' of 6" vertical steel pipe, and 320' of 6" horizontal steel pipe. In this test, the first tank was filled with 592 sacks of weight material and transferred between the tanks at 50psi. The test resulted in 563 sacks of weight material transferred over 52 minutes, thereby providing an average transfer rate of 0.31 sacks/second.

Test 5 included the transference of finely ground weight material between a first 6300 cf bulk storage tank to a second 6300 cf bulk storage tank over a total distance of 708'. This test was similar to Test3, however instead of the short bridge of Test 3, Test 4 incorporated a long bridge to simulate pneumatic transference of weight material during the filling of a transportation vessel. In this test, the pipe work included 50' of 5" hose, 112' of 6" vertical steel pipe, and 480' of horizontal steel pipe. In this test, tank 1 was filled with 563 sacks of weight material and transferred using 60psi. The test resulted in 554 sacks transferred over 9 minutes, thereby providing an average rate of 0.19 sacks/second.

The results from tests 1-5 evidence the pneumatic transference of treated finely ground weight material according to the embodiments described above. Specifically, embodiments described above indicate that micronized barite having a 1% by weight propylene glycol coating allowed for the pneumatic transference of the fines through equipment used in both land and offshore drilling operations. More specifically, micronized barite having a 1% by weight propylene glycol coating allowed for the pneumatic transference of the fines, such that the fines may be subsequently dispersed in drilling fluids used in drilling operations.

Advantageously, embodiments disclosed herein may allow for the mixing of fluids for use in drilling operations that include sized weighting agents. More specifically, the pneumatic transfer of a ground weighting agent of d₉₀ < 10 microns in size may allow for the mixing of drilling fluids formulated for specific drilling operations. The chemical treatment of sized weighting agents may thus allow for the pneumatic transfer of the weighting agents at manufacturing facilities, at drilling locations, or on transportation vessels. Furthermore, chemically treating sized weighting agents may allow for the pneumatic handling of weighting agents between varied aspects of a drilling operation including the manufacturing, drilling, and transportation sections of the operation. Furthermore, because the pneumatic transfer of such sized weighting agent allows for a more efficient transference, the costs associated with transferring and mixing fluids containing the sized weighting agents may also be decreased.

In one embodiment, a drilling engineer may produce a chemically treated sized weighting agent, for example micronized barite d₉₀ < 10 microns in size. The weighting agent may then be pneumatically transferred to a different aspect of the drilling operation. For example, the weighting agent may be transferred within a manufacturing facility, between a manufacturing facility and a drilling operation, between different aspects of the drilling operation, between the manufacturing facility and a transportation vessel (such as a boat), or between multiple transportation vessels. In a specific embodiment, the weighting agent may be pneumatically transferred between a transportation vessel and an offshore drilling rig. In such an embodiment, after the pneumatic transference of the weighting agent, the weighting agent may be dispersed into the fluids to produce a wellbore fluid for use at the drilling operation.

While the present disclosure has been described with respect to a limited number of embodiments, those skilled in the art, having benefit of the present disclosure, will appreciated that other embodiments may be devised which do not depart from the scope of the disclosure described herein. Accordingly, the scope of the disclosure should be limited only by the claims appended hereto.

## Claims

1. A method of processing oilfield weighting agents for pneumatic transference, the method comprising:
treating a weight material ore with a chemical additive to produce a treated weighting agent;
grinding the treated weighting agent to produce a ground treated weighting agent comprising a substantially homogenized mixture of the chemical additive and a ground weighting agent;
classifying the ground weighting agent by size
discharging the ground treated weighting agent from the mill; and
trapping the ground treated weighting agent in a storage vessel.

2. The method of claim 1, wherein the weight material ore comprises barite.

3. The method of claim 1, wherein the ground weighting agent comprises d₉₀ < 10 microns in size.

4. The method of claim 1, wherein the chemical additive comprises glycol.

5. The method of claim 1, wherein the chemical additive comprises propylene glycol.

6. The method of claim 1, wherein the grinding comprises grinding to a specified particle size.

7. The method of claim 6, wherein the specified particle size is d₉₀ < 8 microns.

8. A method of processing oilfield weighting agents for pneumatic transference, the method comprising:
grinding a weight material ore in a mill, wherein the grinding produces a ground weighting agent;
discharging the ground weighting agent from the mill;
applying a chemical additive to the ground weighting agent to produce a treated ground weighting agent; and
trapping the treated ground weighting agent in a storage vessel.

9. The method of claim 8, wherein the ground weighting agent is barite.

10. The method of claim 8, wherein the chemical additive is applied by atomization.

11. The method of claim 8, wherein the chemical additive comprises glycol.

12. The method of claim 8, wherein the chemical additive comprises propylene glycol.

13. The method of claim 8, wherein the grinding comprises grinding to a specified particle size.

14. The method of claim 13, wherein the specified particle size is d₉₀ < 10 microns.

15. The method of claim 8, further comprising:
classifying the ground weighting agent.

16. The method of claim 8, further comprising:
homogenizing the ground weighting agent with the chemical additive.

17. The method of claim 16, wherein the homogenizing the ground weighting agent comprises applying heat and pressure to the chemical additive and the ground weighting agent.

18. The method of claim 8, wherein the treated ground weighting agent is configured for use in a drilling fluid.

19. The method of claim 1, wherein the applying the chemical additive occurs during the grinding of the weight material ore.

20. A method of processing a weighting agent for a drilling fluid, the method comprising:
producing a treated weighting agent having a specified size comprising d₉₀ < 10 microns, wherein the producing comprises applying a chemical additive to the weighting agent;
transferring the treated weighting agent pneumatically to a drilling location; and
mixing the drilling fluid comprising the treated weighting agent.

21. The method of claim 17, wherein the treated weighting agent comprises barite.

22. A method of processing a weighting agent for a drilling fluid, the method comprising:
producing a treated weighting agent, wherein the producing comprises modifying a surface charge of the weighting agent;
transferring the treated weighting agent pneumatically to a drilling location; and
mixing the drilling fluid comprising the treated weighting agent.

23. The method of claim 22, wherein the modifying comprises coating the weighting agent with a chemical additive.

24. A method of processing a weight agent for a drilling fluid, the method comprising:
producing a coated weighting agent, wherein the producing comprises coating a weighting agent with a chemical additive sufficient to allow pneumatic transference;
transferring the coated weighting agent pneumatically to a drilling location; and
dispersing the coated weighting agent in the drilling fluid.

25. The method of claim 24, wherein the weighting agent comprises d₉₀ < 10 microns in size.

26. A composition comprising:
a base fluid; and
a ground treated weighting agent comprising a ground weight material and a chemical additive, wherein the ground treated weighting agent is capable of being dispersed in the base fluid after pneumatic transfer.

27. The composition of claim 26, wherein the weight material is selected from the group consisting of: barium sulfate, calcium carbonate, dolomite, ilmenite, hematite, olivine, siderite, strontium sulfate and combinations thereof.

28. The composition of claim 26, wherein the chemical additive comprises glycol.

29. The composition of claim 26, wherein the ground treated weighting agent comprises a d₉₀ < 10 microns in size.

30. The composition of claim 26, wherein the ground treated weighting agent comprises a substantially homogenized mixture.

31. The composition of claim 26, wherein the weight material is finely ground, and wherein the finely ground weight material comprises a modified surface charge.

32. The composition of claim 26, wherein the ground treated weighting agent is classified by size.

33. The composition of claim 26, wherein the ground weight material is classified by size.
